# FASCICULE DE BREVET EUROPEEN

(11) **EP 3 463 930 B1**
(45) Date de publication et mention de la délivrance du brevet: **24.02.2021**
(21) Numéro de dépôt: 17727941.1
(22) Date de dépôt: 11.05.2017
(51) Int. Cl.: B60C 1/00, C08K 3/04, C08K 3/22, C08K 5/09, C08K 5/14

(54) **PNEUMATIQUE COMPRENANT UN SYSTÈME DE RÉTICULATION COMPRENANT UN PEROXYDE, UN OXYDE MÉTALLIQUE ET UN ACIDE ORGANIQUE INSATURE**
REIFEN MIT EINEM VERNETZUNGSSYSTEM MIT EINEM PEROXID, EINEM METALLOXID UND EINER UNGESÄTTIGTEN ORGANISCHEN SÄURE
TYRE COMPRISING A CROSSLINKING SYSTEM COMPRISING A PEROXIDE, A METAL OXIDE AND AN UNSATURATED ORGANIC ACID

(30) Priorité: 27.05.2016 FR 1654763
(43) Date de publication de la demande: 10.04.2019
(73) Titulaire: Compagnie Générale des Etablissements Michelin, 63000 Clermont-Ferrand (FR)
(72) Inventeur: NAYRAT, Delphine, 63040 CLERMONT-FERRAND CEDEX 9 (FR)
(74) Mandataire: Wroblewski, Nicolas Paul André
(86) Numéro de dépôt international: PCT/FR2017/051139
(87) Numéro de publication internationale: WO 2017/203124

(56) Documents cités:
- EP-A1- 1 847 564
- WO-A1-2015/059167
- US-A- 4 191 671
- US-A1- 2005 288 441

## Description

### Domaine technique

La présente invention est relative à des systèmes de réticulation à base de peroxyde pour des compositions comprenant un élastomère diénique, et aux pneumatiques fabriqués à partir de ces compositions.

### Etat de la technique

La réticulation de matrice élastomérique est une étape indispensable à la fabrication des pneumatiques. Elle permet de faire passer la matrice élastomérique d'un état plastique à un état élastique.

La réticulation des matrices élastomériques classiquement utilisées en caoutchouterie est généralement réalisée à l'aide d'un agent réticulant à base de soufre ou d'un agent donneur de soufre. Ces agents réticulant sont très souvent utilisés en association avec des agents accélérateurs de réticulation, tels que des accélérateurs du type thiazoles ainsi que leurs dérivés, ou de types sulfénamides, thiurames, dithiocarbamates, dithiophosphates, thiourées et xanthates.

Les mélanges de caoutchouc, notamment les mélanges pour couches internes de pneumatiques subissent généralement un régime thermique élevé. Ce vieillissement impacte les propriétés du matériau comme décrit dans deux publications de 1990 *(*Asahiro Ahagon, M. Kida, and H. Kaidou, Aging of Tire Parts during Service. I. Types of Aging in Heavy-Duty Tires, Rubber Chemistry and Technology: November 1990, Vol. 63, No. 5, pp. 683-697 et Hiroyuki Kaidou and A. Ahagon, Aging of Tire Parts during Service. II. Aging of Belt-Skim Rubbers in Passenger Tires, Rubber Chemistry and Technology: November 1990, Vol. 63, No. 5, pp. 698-712*)* avec comme conséquence une augmentation du vieillissement thermique et donc de l'augmentation du phénomène de réversion. Les manufacturiers ont développé des compositions de pneumatique permettant de diminuer réduire voire supprimer les phénomènes de réversion, de diverses façons et notamment par l'utilisation de peroxyde comme système de réticulation.

Néanmoins, les manufacturiers cherchent toujours des solutions pour maintenir un faible niveau de réversion, tout en améliorant les propriétés du mélange, en particulier l'allongement rupture et la cohésion du mélange afin d'améliorer la durée de vie des pneumatiques et leurs propriétés, notamment leurs propriétés en endurance sous forte contrainte et/ou forte déformation.

### Exposé de l'invention

Suite à leurs recherches, les Demanderesses ont développé des compositions dont le système de réticulation permet d'améliorer significativement les propriétés limites et la cohésion des mélanges, tout en maintenant un faible niveau de réversion.

Ces compositions sont à base d'un élastomère diénique et d'un système de réticulation comprenant un peroxyde, au moins 5 pce d'un acide organique insaturé et/ou l'un de ses sels, et un oxyde métallique.

En conséquence, l'invention a pour objet un pneumatique comportant au moins une couche comprenant une composition à base d'un élastomère diénique et d'un système de réticulation comprenant un peroxyde, au moins 5 pce d'un acide carboxylique insaturé et/ou l'un de ses sels, et un oxyde métallique, **l'acide carboxylique insaturé étant l'acide sorbique.**

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### Matrice élastomérique

La composition du pneumatique de l'invention peut contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions du pneumatique selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation préférentiel particulier, l'élastomère diénique est un élastomère majoritairement isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR).

L'élastomère diénique est de préférence choisi dans le groupe constitué par le caoutchouc naturel, les polyisoprènes de synthèse et leurs mélanges. Parmi ces polyisoprènes de synthèse, sont utilisés de préférence des polyisoprènes ayant un taux (% molaire) de liaisons cis 1,4 supérieur à 90%, plus préférentiellement encore supérieur à 98%. De préférence encore, l'élastomère diénique est du caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

### Système de réticulation

### Peroxyde

Le système de réticulation de la composition du pneumatique selon l'invention comprend un peroxyde, qui peut être tout peroxyde connu de l'homme de l'art.

Parmi les peroxydes, bien connus de l'homme de l'art, il est préférable d'utiliser pour l'invention un peroxyde choisi dans la famille des peroxydes organiques, et en particulier un peroxyde choisi parmi ou dans le groupe constitué par le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et leurs mélanges.

Il existe dans le commerce divers produits conditionnés, connus sous leurs marques de fabrique; on peut citer les peroxydes suivants : bis (2,4-di-chlorobenzoyl) peroxide ou DCBP-50 (« Perkadox PD-50S-ps-a » de la société AKZO Nobel Chemical B.V. ou « Luperox CST » de la société ARKEMA), benzoyl peroxide ou BP-50 (« Perkadox L-50S-ps » de la société AKZO Nobel Chemical B.V.), dicumyl peroxide (« Di-Cup 40C » de la société Geo Specialty Chemicals, Inc. ou « Varox DCP-40C » de la société R.T. Vanderbilt Company, Inc. ou le « Dicup » de la société Hercules Powder Co.), 2,5-dimethyl-2,5-di(t-butylperoxy)hexane ou DBPH (« Varox DBPH-50 » de la société R.T. Vanderbilt Company, Inc. ou « Luperox 101 » de la société ARKEMA ou « Trigonox 101 » de la société AKZO Nobel Chemical B.V.), di-tert-butyl peroxide ou DTBP (« Luperox DI » de la société ARKEMA).

Préférentiellement, la quantité de peroxyde à utiliser pour les besoins de l'invention est inférieure ou égale à 4 pce. De préférence, la quantité de peroxyde dans la composition est comprise dans un domaine allant de 0,1 à 4 pce. En effet, en dessous d'une quantité de 0,1 pce, l'effet du peroxyde n'est pas notable tandis qu'au-delà de 4 pce, le compromis rigidité / cohésion de la composition est diminué. Plus préférentiellement, la quantité de peroxyde dans la composition est comprise dans un domaine allant de 0,2 à 4 pce, de préférence de 0,5 à 3, de préférence encore de 1 à 2 pce.

### Acide organique insaturé

La composition du pneumatique selon l'invention comprend en outre au moins 5 pce d'un acide organique insaturé et/ou l'un de ses sels.

Selon l'invention, l'acide organique insaturé est l'acide sorbique.

Le sel de cet acide organique insaturé peut être un sel choisi parmi ou dans le groupe constitué par les sels de zinc, les sels de magnésium, les sels de calcium et leurs mélanges. De préférence, le sel d'acide organique insaturé est un sel de zinc.

A titre d'exemple d'acides organiques insaturés utilisables, on peut citer l'acide hexa-2,4 diénoïque ou acide sorbique de la société FOODCHEM Int. Corp

Préférentiellement, le taux d'acide organique insaturé peut être compris dans un domaine allant de 5 à 40 pce, de préférence de 6 à 30 pce, de préférence encore de 10 à 25 pce.

### Oxyde métallique

La composition selon l'invention comprend en outre un oxyde métallique.

Préférentiellement, l'oxyde métallique comprend un métal du groupe II, IV, V, VI, VII ou VIII et de l'oxygène. Par exemple, l'oxyde métallique peut être choisi parmi : MgO, MnO, ZnO, CaO, GeO, TiO, TiO₂, Ti₂0₃, Ti₃O₅, SnO, Sn0₂, SrO, BaO et les mélanges de ces oxydes métalliques. Préférentiellement, l'oxyde métallique est choisi parmi ou dans le groupe constitué par: MgO, ZnO, TiO₂, CaO et les mélanges de ces oxydes métalliques, plus préférentiellement l'oxyde métallique est choisi dans le groupe constitué par les oxydes de zinc, les oxydes de magnésium et les mélanges de ces oxydes métalliques, et très préférentiellement, l'oxyde métallique est un oxyde de zinc.

A titre d'exemple d'oxydes métalliques disponibles dans le commerce, on peut citer l'oxyde de zinc de grade industriel ou l'oxyde de magnésium de grade industriel, tous deux commercialisé par la société Umicore.

Le taux d'oxyde métallique dans la composition du pneumatique selon l'invention est de préférence compris dans un domaine variant de 2 à 20 pce, préférentiellement de 2 à 10 pce, de préférence de 4 à 8 pce. Par ailleurs, l'oxyde métallique peut avoir toute surface spécifique BET (mesurée selon la norme ISO 4652), par exemple elle peut être d'environ 4.5m²/g, ou encore de 9,5m²/g ou de 45m²/g. Il peut également s'agir d'un mélange d'oxydes métalliques ayant des surfaces spécifiques différentes.

Par ailleurs, la composition peut être exempte de soufre en tant qu'agent de vulcanisation, ou en contenir moins de 0,3 pce et de préférence moins de 0,1 pce. Le soufre peut être du soufre moléculaire ou provenir d'un agent donneur de soufre, tel que les alkyl phénol disulfures (APDS). En d'autres termes, selon l'invention la présence de soufre ou d'agent donneur de soufre classiquement utilisé pour la réticulation des élastomères diéniques est possible mais n'est pas obligatoire.

Avantageusement, la proportion d'acide organique insaturée, de préférence de l'acide carboxylique insaturé, par rapport à l'oxyde métallique est déterminée de manière à avoir 2 moles d'acide organique insaturé, de préférence de l'acide carboxylique insaturé, pour une mole d'oxyde métallique.

Quelles que soient les quantités d'acide organique insaturé, de préférence de l'acide carboxylique insaturé, et de peroxyde vues ci-dessus, il est avantageux que le rapport du taux d'acide organique insaturé (que l'acide organique porte une ou plusieurs fonctions acides), de préférence de l'acide carboxylique insaturé, sur le taux de peroxyde soit supérieur ou égal à 1. De préférence, le rapport du taux de peroxyde et du taux d'acide organique insaturé, de préférence de l'acide carboxylique insaturé, sur le taux de peroxyde est compris entre 5 et 50, de préférence entre 10 et 40, de préférence encore entre 10 et 25 et encore plus préférentiellement entre 10 et 20.

### Charge renforçante

La composition du pneumatique selon l'invention comprend avantageusement une charge renforçante, connue pour ses capacités à renforcer une composition de caoutchouc utilisable pour la fabrication de pneumatiques. Toutefois, bien qu'avantageuse, l'utilisation d'une charge renforçante n'est pas obligatoire dans le cadre de la présente invention.

La charge renforçante peut comprendre du noir de carbone, une charge organique autre que le noir de carbone, une charge inorganique ou le mélange d'au moins deux de ces charges. Préférentiellement, la charge renforçante peut comprendre majoritairement, voire exclusivement, du noir de carbone. La charge renforçante peut également comprendre majoritairement, voire exclusivement, une charge inorganique renforçante.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, en ce qui concerne la silice, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 10 pce, plus préférentiellement compris dans un domaine allant de 0,5 à 6 pce. Ce taux est aisément ajusté par l'homme du métier selon le taux de charge inorganique utilisé dans la composition.

Selon l'invention, lorsque la charge renforçante est présente, le taux de charge renforçante, de préférence la charge renforçante comprenant majoritairement, voire exclusivement du noir de carbone, peut être compris dans un domaine allant de plus de 0 à 70 pce, de préférence de 10 à 70 pce, de préférence de 15 à 60 pce, de préférence de 20 à 50 pce.

### Additifs divers

La composition peut également comporter tout ou partie des additifs usuels habituellement utilisés dans les compositions d'élastomères, notamment celles destinées à la fabrication de couches internes, comme par exemple des pigments, des agents de protection tels que cires anti-ozone, anti-ozonants chimiques, antioxydants, des agents plastifiants tels que ceux proposés ci-après, des agents anti-fatigue, des résines renforçantes, des accepteurs (par exemple résine phénolique novolaque) ou des donneurs de méthylène (par exemple HMT ou H3M).

Lorsque la composition du pneumatique selon l'invention est une composition de couche interne de pneumatique, elle est avantageusement dépourvue d'agent antioxydant.

Lorsque la composition du pneumatique selon l'invention est une composition de couche interne de pneumatique, elle peut être dépourvue d'agent plastifiant. De manière alternative et selon un mode de réalisation également préférentiel, la composition du pneumatique selon l'invention comporte en outre un agent plastifiant. De préférence cet agent plastifiant est une résine hydrocarbonée solide (ou résine plastifiante), une huile d'extension (ou huile plastifiante), ou un mélange des deux.

### Pneumatiques

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et à la bande de roulement des pneumatiques.

Aussi, dans le pneumatique selon la présente invention la couche peut être une couche interne ou la bande de roulement. Selon l'invention, la couche interne peut être choisie dans le groupe constitué par les nappes carcasse, les nappes sommet, la ceinture de pneumatique, les bourrages-tringle, les couches de découplage et les combinaisons de ces couches internes. De préférence, la couche interne est choisie dans le groupe constitué par les nappes carcasses, les nappes sommet et les combinaisons de ces couches internes.

### Préparation des compositions de caoutchouc

Les compositions utilisées dans les pneumatiques de l'invention, peuvent être fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 80°C et 140°C, de préférence entre 100°C et 125°C, suivie d'une seconde phase de travail mécanique (parfois qualifiée de phase "productive") à plus basse température, typiquement inférieure à 100°C, par exemple entre 60°C et 100°C, phase de finition au cours de laquelle est incorporé l'agent de réticulation chimique, en particulier le système de réticulation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires et autres additifs divers, à l'exception du système de réticulation. La durée totale du malaxage, dans cette phase non-productive, est de préférence comprise entre 2 et 10 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 5 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme bande de roulement ou couche interne telle qu'une nappe carcasse ou une nappe sommet.

### EXEMPLES

### I. Mesures et tests utilisés

### 1.1 Propriétés dynamiques après cuisson (essai de traction)

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette.

On mesure en première élongation les modules sécants nominaux (ou contraintes apparentes, en MPa) à 100% d'allongement noté M100 à une vitesse d'extrusion de 500 mm/min.

Les essais d'allongement rupture (AR%), de module d'allongement (M100), de contrainte rupture (CR) et de cohésion (énergie rupture (ER)) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. L'Energie rupture est proportionnelle au produit de l'allongement rupture et de la contrainte rupture et est exprimée en MJ.

Toutes ces mesures de traction sont effectuées dans les conditions normales de température (23±2°C) et d'hygrométrie (50±5% d'humidité relative), selon la norme française NF T 40-101 (décembre 1979).

### II. Préparation des compositions

Les compositions A à I, dont les formulations en pce figurent dans les tableaux 1 et 2 ci-dessous, ont été préparées de la manière suivante.

On introduit dans un mélangeur interne (taux de remplissage final : environ 70% en volume), dont la température initiale de cuve est d'environ 50°C, successivement les élastomères diéniques, les charges renforçantes, ainsi que les éventuels divers autres ingrédients a l'exception du système de vulcanisation. On conduit alors un travail thermomécanique (phase non productive) en une étape, qui dure au total environ 3 à 4 min, jusqu'à atteindre une température maximale de « tombée » de 120°C. On récupère le mélange ainsi obtenu, on le refroidit puis on incorpore le système de vulcanisation sur un mélangeur (homo-finisseur) à 70°C, en mélangeant le tout (phase productive) pendant un temps approprié (par exemple une dizaine de minutes).

Les compositions ainsi obtenues sont ensuite calandrées sous la forme de plaques (épaisseur 2 à 3 mm) ou de feuilles fines de caoutchouc pour la mesure de leurs propriétés physiques ou mécaniques.

Les produits suivants ont été utilisés :

| | |
|---|---|
| - NR | : Caoutchouc naturel |
| - N326 | : Noir de carbone de grade N326 selon la norme ASTM D-1765 de la société Cabot |
| - Dicup | : dicumyle peroxyde « Dicup » de la société Hercules Powder Co |
| - ZnO | : Oxyde de zinc de grade industriel de la société Umicore |
| - Ac. sorb. | : Acide sorbique de la société Foodchem International Corporation |

### III. Essais et Résultats

### III. 1 Effet de la présence d'acide organique insaturé et d'oxyde de zinc

On a préparé des compositions D, E et F qui sont conformes à l'invention en ce qu'elles comprennent un élastomère diénique (caoutchouc naturel) et un système de réticulation comprenant du peroxyde, de un acide organique insaturé (acide sorbique) et un oxyde métallique (oxyde de zinc). Ces compositions comprennent respectivement 0, 20 ou 40 pce de charge renforçante (noir de carbone). Le taux d'oxyde de zinc a été adapté au taux d'acide sorbique de manière à ce qu'il y ait 2 moles d'acide pour une mole d'oxyde de zinc.

On a utilisé des compositions témoins A, B et C qui diffèrent respectivement des compositions D, E et F en ce qu'elles ne comprennent pas d'acide organique insaturé ni d'oxyde métallique. On a également utilisé une composition témoin G qui diffèrent de la composition D en ce qu'elle ne comprend pas d'oxyde métallique ; une composition témoin H qui défère de la composition F en ce qu'elle ne comprend pas de peroxyde et une composition témoin I qui diffère de la composition F en ce qu'elle ne comprend pas d'acide organique insaturé.

Les résultats sont présentés en base 100 par rapport à la composition témoin A.

**Tableau 1**

| | **A témoin** | **B témoin** | **C témoin** | **D** | **E** | **F** | **G témoin** | **H témoin** | **I témoin** |
|---|---|---|---|---|---|---|---|---|---|
| NR | 100 | 100 | 100 | 100 | 100 | 100 | 100 | 100 | 100 |
| N326 | 0 | 20 | 40 | 0 | 20 | 40 | 0 | **40** | **40** |
| Dicup | 1,5 | 1,5 | 1,5 | 1,5 | 1,5 | 1,5 | 1,5 | 0 | 1.5 |
| Ac. sorb. | 0 | 0 | 0 | 21,7 | 21,7 | 21,7 | 21,7 | 21,7 | 0 |
| ZnO | 0 | 0 | 0 | 7,8 | 7,8 | 7,8 | 0 | 7.8 | 7.8 |
| M100 | 100 | 156 | 202 | 157 | 266 | 344 | 130 | 30 | 30 |
| AR% | 100 | 78 | 77 | 99 | 125 | 117 | 30 | 105 | 105 |
| CR | 100 | 185 | 334 | 336 | 987 | 987 | 65 | 25 | 25 |
| ER (MJ) | 100 | 145 | 258 | 332 | 1237 | 1157 | 20 | 26 | 26 |

Les valeurs de M100 indiquent que les compositions conformes à l'invention ont un bon niveau de réticulation.

Par ailleurs, en comparant les résultats obtenus à partir des compositions D, E et F, et A, B et C respectivement, on a constaté que l'utilisation d'acide organique insaturé tel que l'acide sorbique et d'un oxyde métallique tel que l'oxyde de zinc en présence de peroxyde permet d'améliorer à la fois les propriétés d'allongement rupture et de cohésion en comparaison avec des compositions qui ne comprenne que du peroxyde comme système de réticulation. On note même que la composition D, conforme à l'invention, permet d'améliorer la cohésion des mélanges, tout en conservant des propriétés d'allongement rupture acceptables par rapport aux compositions B et C comprenant une charge renforçante mais ne comprenant pas d'acide organique insaturé et d'oxyde métallique.

Les compositions témoins G, H et I permettent de démontrer que la présence d'oxyde métallique, de peroxyde et d'acide organique insaturé est essentielle pour la mise en œuvre de l'invention.

### III. 2 Effet du taux d'acide organique insaturé et de peroxyde

Des compositions J et K, conformes à l'invention, ont également été comparées à la composition A précédemment décrite en utilisant différents taux de peroxyde ou d'acide organique insaturé et d'oxyde métallique. Le taux d'oxyde de zinc a été adapté au taux d'acide sorbique de manière à ce qu'il y ait 2 moles d'acide pour une mole d'oxyde de zinc.

**Tableau 2**

| | **A témoin** | **J** | **K** |
|---|---|---|---|
| NR | 100 | 100 | 100 |
| N326 | 0 | 0 | 0 |
| Dicup | 1,5 | 1,5 | 1 |
| Ac. sorb. | 0 | 10,8 | 21,7 |
| ZnO | 0 | 3,88 | 7,8 |
| M100 | 100 | 102 | 157 |
| AR% | 100 | 99 | 99 |
| CR | 100 | 197 | 316 |
| ER (MJ) | 100 | 195 | 330 |

Ainsi, les compositions du pneumatique selon l'invention présentent un excellent compromis de rigidité et cohésion, et sont par conséquent particulièrement bien adaptées aux compositions de couches internes de pneumatiques.

## Revendications

1. Pneumatique comportant au moins une couche comprenant une composition à base d'un élastomère diénique et d'un système de réticulation comprenant un peroxyde, ladite composition comprenant en outre au moins 5 parties en poids pour cent parties en poids d'élastomère, pce, d'un acide carboxylique insaturé et/ou l'un de ses sels, et un oxyde métallique, l'acide carboxylique insaturé étant l'acide sorbique.

2. Pneumatique selon la revendication 1, dans lequel l'élastomère diénique comprend majoritairement un élastomère choisi dans le groupe constitué par les polybutadiènes, les polyisoprènes de synthèse, le caoutchouc naturel, les copolymères de butadiène, les copolymères d'isoprène et les mélanges de ces élastomères, de préférence choisi dans le groupe constitué par les polyisoprènes de synthèse, le caoutchouc naturel et leurs mélanges.

3. Pneumatique selon la revendication 1 ou 2, dans lequel le taux d'élastomère diénique est compris dans un domaine allant de 50 à 100 pce, de préférence le taux d'élastomère diénique est de 100 pce.

4. Pneumatique selon l'une quelconque des revendications précédentes, dans lequel le sel d'acide carboxylique insaturé est un sel choisi dans le groupe constitué par les sels de zinc, les sels de magnésium, les sels de calcium et leurs mélanges, de préférence le sel d'acide carboxylique insaturé est un sel de zinc.

5. Pneumatique selon l'une quelconque des revendications précédentes, dans lequel le taux d'acide carboxylique insaturé est compris dans un domaine allant de 5 à 40 pce, de préférence de 10 à 25 pce.

6. Pneumatique selon l'une quelconque des revendications précédentes, dans lequel l'oxyde métallique est choisi dans le groupe constitué par les oxydes de zinc, les oxydes de magnésium et les mélanges de ces oxydes métalliques, de préférence, l'oxyde métallique est un oxyde de zinc.

7. Pneumatique selon l'une quelconque des revendications précédentes, dans lequel le taux d'oxyde métallique est compris dans un domaine allant de 2 à 20 pce, de préférence de 4 à 8 pce.

8. Pneumatique selon l'une quelconque des revendications précédentes, dans lequel le peroxyde est choisi dans le groupe constitué par le peroxyde de dicumyl, les peroxydes d'aryl ou de diaryl, le peroxyde de diacetyl, le peroxyde de benzoyle, le peroxyde de dibenzoyle, le peroxyde de ditertbutyl, le peroxyde de tertbutylcumyl, le 2,5-bis (tertbutylperoxy)-2,5-dimethylhexane, et leurs mélanges.

9. Pneumatique selon l'une quelconque des revendications précédentes, dans lequel le taux de peroxyde est compris dans un domaine allant de 0,2 à 4 pce, de préférence de 1 à 2 pce.

10. Pneumatique selon l'une quelconque des revendications précédentes, dans lequel la composition comprend en outre une charge renforçante comprenant un noir de carbone et/ou une charge renforçante inorganique.

11. Pneumatique selon la revendication 10, dans lequel le taux de charge renforçante dans ladite composition est compris dans un domaine allant de plus de 0 à 70 pce, de préférence de plus de 15 à 60 pce.

12. Pneumatique selon l'une quelconque des revendications précédentes, dans lequel ladite couche est une couche interne ou la bande de roulement.

13. Pneumatique selon la revendication 12, dans lequel ladite couche interne est choisie dans le groupe constitué par les nappes carcasse, les nappes sommet, la ceinture de pneumatique, les bourrages-tringle, les couches de découplage et les combinaisons de ces couches internes, de préférence dans le groupe constitué par les nappes carcasse, les nappes sommet et les combinaisons de ces couches internes.

## Patentansprüche

1. Reifen mit mindestens einer Schicht, umfassend eine Zusammensetzung auf Basis eines Dienelastomers und eines Vernetzungssystems, das ein Peroxid umfasst, wobei die Zusammensetzung außerdem mindestens 5 Gewichtsteile pro hundert Gewichtsteile Elastomer, phe, einer ungesättigten Carbonsäure und/oder eines ihrer Salze und ein Metalloxid umfasst, wobei es sich bei der ungesättigten Carbonsäure um Sorbinsäure handelt.

2. Reifen nach Anspruch 1, wobei das Dienelastomer mehrheitlich ein Elastomer aus der Gruppe bestehend aus Polybutadienen, synthetischen Polyisoprenen, Naturkautschuk, Butadien-Copolymeren, Isopren-Copolymeren und Mischungen dieser Elastomere, vorzugsweise aus der Gruppe bestehend aus synthetischen Polyisoprenen, Naturkautschuk und Mischungen davon, umfasst.

3. Reifen nach Anspruch 1 oder 2, wobei der Gehalt an Dienelastomer in einem Bereich von 50 bis 100 phe liegt, vorzugsweise der Gehalt an Dienelastomer 100 phe beträgt.

4. Reifen nach einem der vorhergehenden Ansprüche, wobei es sich bei dem Salz der ungesättigten Carbonsäure um ein Salz aus der Gruppe bestehend aus Zinksalzen, Magnesiumsalzen, Calciumsalzen und Mischungen davon besteht, vorzugsweise es sich bei dem Salz der ungesättigten Carbonsäure um ein Zinksalz handelt.

5. Reifen nach einem der vorhergehenden Ansprüche, wobei der Gehalt an ungesättigter Carbonsäure in einem Bereich von 5 bis 40 phe, vorzugsweise 10 bis 25 phe, liegt.

6. Reifen nach einem der vorhergehenden Ansprüche, wobei das Metalloxid aus der Gruppe bestehend aus Zinkoxiden, Magnesiumoxiden und Mischungen dieser Metalloxide ausgewählt ist, vorzugsweise es sich bei dem Metalloxid um ein Zinkoxid handelt.

7. Reifen nach einem der vorhergehenden Ansprüche, wobei der Gehalt an Metalloxid in einem Bereich von 2 bis 20 phe, vorzugsweise 4 bis 8 phe, liegt.

8. Reifen nach einem der vorhergehenden Ansprüche, wobei das Peroxid aus der Gruppe bestehend aus Dicumylperoxid, Aryl- oder Diarylperoxiden, Diacetylperoxid, Benzoylperoxid, Dibenzoylperoxid, Di-tert-butylperoxid, tert-Butylcumylperoxid, 2,5-Bis(tert-butylperoxy)-2,5-dimethylhexan und deren Mischungen ausgewählt ist.

9. Reifen nach einem der vorhergehenden Ansprüche, wobei der Gehalt an Peroxid in einem Bereich von 0,2 bis 4 phe, vorzugsweise von 1 bis 2 phe, liegt.

10. Reifen nach einem der vorhergehenden Ansprüche, wobei die Zusammensetzung außerdem einen verstärkenden Füllstoff, der Ruß und/oder einen anorganischen verstärkenden Füllstoff umfasst, umfasst.

11. Reifen nach Anspruch 10, wobei der Gehalt an verstärkendem Füllstoff in der Zusammensetzung in einem Bereich von mehr als 0 bis 70 phe, vorzugsweise von mehr als 15 bis 60 phe, liegt.

12. Reifen nach einem der vorhergehenden Ansprüche, wobei es sich bei der Schicht um eine Innenschicht oder die Lauffläche handelt.

13. Reifen nach Anspruch 12, wobei die Innenschicht aus der Gruppe bestehend aus Karkasslagen, Zwischenbauten, dem Reifengürtel, Kernreitern, Entkopplungsschichten und Kombinationen dieser Innenschichten, vorzugsweise aus der Gruppe bestehend aus Karkasslagen, Zwischenbauten und Kombinationen dieser Innenschichten, ausgewählt ist.

## Claims

1. Tire comprising at least one layer comprising a composition based on a diene elastomer and on a crosslinking system comprising a peroxide, said composition further comprising at least 5 parts by weight per hundred parts by weight of elastomer, phr, of an unsaturated carboxylic acid and/or a salt thereof, and a metal oxide, the unsaturated carboxylic acid being sorbic acid.

2. Tire according to claim 1, wherein the diene elastomer predominantly comprises an elastomer chosen from the group consisting of polybutadienes, synthetic polyisoprenes, natural rubber, butadiene copolymers, isoprene copolymers and mixtures of these elastomers, preferably chosen from the group consisting of synthetic polyisoprenes, natural rubber and mixtures thereof.

3. Tire according to claim 1 or 2, wherein the level of diene elastomer is within a range ranging from 50 to 100 phr, preferably the level of diene elastomer is 100 phr.

4. Tire according to any one of the preceding claims, wherein the unsaturated carboxylic acid salt is a salt chosen from the group consisting of zinc salts, magnesium salts, calcium salts and their mixtures, preferably. the unsaturated carboxylic acid salt is a zinc salt.

5. Tire according to any one of the preceding claims, wherein the level of unsaturated carboxylic acid is in a range ranging from 5 to 40 phr, preferably from 10 to 25 phr.

6. Tire according to any one of the preceding claims, wherein the metal oxide is chosen from the group consisting of zinc oxides, magnesium oxides and mixtures of these metal oxides, preferably the metal oxide is zinc oxide.

7. Tire according to any one of the preceding claims, wherein the level of metal oxide is within a range ranging from 2 to 20 phr, preferably from 4 to 8 phr.

8. Tire according to any one of the preceding claims, wherein the peroxide is chosen from the group consisting of dicumyl peroxide, aryl or diaryl peroxides, diacetyl peroxide, benzoyl peroxide, dibenzoyl peroxide, ditertbutyl peroxide, tertbutylcumyl peroxide, 2,5-bis (tertbutylperoxy)-2,5-dimethylhexane, and mixtures thereof.

9. Tire according to any one of the preceding claims, wherein the level of peroxide is within a range ranging from 0.2 to 4 phr, preferably from 1 to 2 phr.

10. Tire according to any one of the preceding claims, wherein the composition further comprises a reinforcing filler comprising a carbon black and/or an inorganic reinforcing filler.

11. Tire according to claim 10, wherein the level of reinforcing filler in said composition is within a range ranging from more than 0 to 70 phr, preferably more than 15 to 60 phr.

12. Tire according to any one of the preceding claims, wherein said layer is an inner layer or the tread.

13. Tire according to claim 12, wherein said internal layer is chosen from the group consisting of carcass plies, crown plies, the tire belt, bead fillings, decoupling layers and combinations of these internal layers, preferably from the group consisting of carcass plies, crown plies and combinations of these internal layers.
